# EUROPEAN PATENT APPLICATION

(11) **EP 2 410 375 A2**
(43) Date of publication of application: **25.01.2012**
(21) Application number: 10753697.1
(22) Date of filing: 17.03.2010
(51) Int. Cl.: G02F 1/1335, H04N 13/00

(54) **FILTER, DISPLAY DEVICE AND A LIQUID-CRYSTAL DISPLAY DEVICE**

(30) Priority: 17.03.2009 KR 20090022570; 17.06.2009 US 218058 P
(71) Applicant: LG Electronics Inc., Seoul 150-721 (KR)
(72) Inventor: SEO, Youngjae, Seoul 137-724 (KR); LEE, Sangwoo, Seoul 137-724 (KR); SOHN, Jihoon, Seoul 137-724 (KR); SHIN, Woonseo, Seoul 137-724 (KR); PARK, Taesoo, Seoul 137-724 (KR); KWON, Heewon, Seoul 137-724 (KR); LEE, Yonghwan, Seoul 137-724 (KR); CHA, Hongrae, Seoul 137-724 (KR)
(74) Representative: Katérle, Axel
(86) International application number: PCT/KR2010/001650
(87) International publication number: WO 2010/107247

(57) **Abstract**

An embodiment of the invention relates to a filter, a display device, and a liquid crystal display.

The display device according to the embodiment of the invention includes a display panel, a filter disposed in the front of the display panel, and 3D glasses including a left eye lens and a right eye lens. The filter includes a substrate and a circular polarizing layer disposed on the substrate. Each of the left eye lens and the right eye lens transmits circularly polarized light and is turned on or off in response to an input synchronization signal.

## Description

### [Technical Field]

Embodiments of the invention relate to a filter, a display device, and a liquid crystal display.

### [Background Art]

A display device includes a display panel displaying an image and a filter.

The display panel displays a predetermined image on its screen. Examples of the display panel include a liquid crystal display (LCD) panel, a field emission display (FED) panel, an organic light emitting diode (OLED) display panel, and a plasma display panel (PDP).

The filter may be disposed in front of the display panel.

### [Disclosure]

### [Technical Problem]

Embodiments of the invention provide a filter, a display device, and a liquid crystal display capable of increasing a viewing angle using a circular polarizing layer.

### [Technical Solution]

A display device according to an embodiment of the invention comprises a display panel, a filter disposed in the front of the display panel, and 3D glasses including a left eye lens and a right eye lens, wherein the filter includes a substrate and a circular polarizing layer disposed on the substrate, wherein each of the left eye lens and the right eye lens transmits circularly polarized light and is turned on or off in response to an input synchronization signal.

Each of the left eye lens and the right eye lens may include a liquid crystal layer.

The display device may further comprise a signal transmitter for supplying the synchronization signal to the 3D glasses.

A liquid crystal display according to an embodiment of the invention comprises a liquid crystal display panel and 3D glasses including a left eye lens and a right eye lens, wherein the liquid crystal display panel includes a first substrate, on which a first electrode is disposed, a second substrate, on which a second electrode is disposed, a liquid crystal layer disposed between the first substrate and the second substrate, a first linear polarizing layer disposed on the first substrate, a circular polarizing layer disposed adjacent to the first linear polarizing layer, and a second linear polarizing layer disposed on the second substrate.

Each of the left eye lens and the right eye lens may transmit circularly polarized light and may be turned on or off in response to an input synchronization signal.

Each of the left eye lens and the right eye lens may include a liquid crystal layer.

The liquid crystal display may further comprise a signal transmitter for supplying the synchronization signal to the 3D glasses.

The liquid crystal display may further comprise a filter disposed in the front of the liquid crystal display panel, and the filter includes a third linear polarizing layer.

The third linear polarizing layer may include a left eye image linear polarization part and a right eye image linear polarization part.

One of the left eye image linear polarization part and the right eye image linear polarization part may have a retardation value of λ/2, and the other may have a retardation value of zero.

Each of the left eye lens and the right eye lens may be a polarizing lens.

A difference between retardation values of the left eye lens and the right eye lens may be about λ/2.

A filter according to an embodiment of the invention comprises a first substrate, a second substrate, and a liquid crystal layer disposed between the first substrate and the second substrate, wherein the liquid crystal layer includes a left eye image part and a right eye image part, wherein a retardation value of the left eye image part and a retardation value of the right eye image part are substantially equal to each other in a 2D mode, wherein the retardation value of the left eye image part is different from the retardation value of the right eye image part in a 3D mode.

The liquid crystal display may further comprise a first electrode disposed on the first substrate and a second electrode disposed on the second substrate.

Each of the first electrode and the second electrode may be a transparent electrode.

The retardation value of the left eye image part and the retardation value of the right eye image part may be zero in the 2D mode.

A difference between the retardation value of the left eye image part and the retardation value of the right eye image part may be about λ/2 in the 3D mode.

One of the retardation value of the left eye image part and the retardation value of the right eye image part may be about λ/4, and the other may be about -λ/4 in the 3D mode.

One of the retardation value of the left eye image part and the retardation value of the right eye image part may be about λ/2, and the other may be zero in the 3D mode.

The 2D mode and the 3D mode may be changed based on a driving signal supplied to the first electrode and/or the second electrode.

### [Advantageous Effects]

A filter, a display device, and a liquid crystal display according to example embodiments of the invention may increase a viewing angle using a circular polarizing layer and thus may improve the quality of a 3D image.

### [Description of Drawings]

FIGs. 1 to 9 illustrate a filter and a display device according to an example embodiment of the invention;
FIGs. 10 to 15 illustrate an example of using shutter type 3D glasses;
FIGs. 16 to 18 illustrate a liquid crystal display; and
FIGs. 19 to 24 illustrate a filter using a liquid crystal layer.

### [Mode for Invention]

Reference will now be made in detail embodiments of the invention examples of which are illustrated in the accompanying drawings. Since the present invention may be modified in various ways and may have various forms, specific embodiments are illustrated in the drawings and are described in detail in the present specification. However, it should be understood that the present invention are not limited to specific disclosed embodiments, but include all modifications, equivalents and substitutes included within the spirit and technical scope of the present invention.

The terms 'first', 'second', etc. may be used to describe various components, but the components are not limited by such terms. The terms are used only for the purpose of distinguishing one component from other components. For example, a first component may be designated as a second component without departing from the scope of the present invention. In the same manner, the second component may be designated as the first component.

The term "and/or" encompasses both combinations of the plurality of related items disclosed and any item from among the plurality of related items disclosed.

When an arbitrary component is described as "being connected to "or" being linked to" another component, this should be understood to mean that still another component(s) may exist between them, although the arbitrary component may be directly connected to, or linked to, the second component. In contrast, when an arbitrary component is described as "being directly connected to" or "being directly linked to" another component, this should be understood to mean that no component exists between them.

The terms used in the present application are used to describe only specific embodiments or examples, and are not intended to limit the present invention. A singular expression can include a plural expression as long as it does not have an apparently different meaning in context.

In the present application, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

Unless otherwise specified, all of the terms which are used herein, including the technical or scientific terms, have the same meanings as those that are generally understood by a person having ordinary knowledge in the art to which the present invention pertains. The terms defined in a generally used dictionary must be understood to have meanings identical to those used in the context of a related art, and are not to be construed to have ideal or excessively formal meanings unless they are obviously specified in the present application.

The following exemplary embodiments of the present invention are provided to those skilled in the art in order to describe the present invention more completely. Accordingly, shapes and sizes of elements shown in the drawings may be exaggerated for clarity.

Hereinafter, a filter and a display device including the same according to example embodiments of the invention are described in detail with reference to the accompanying drawings.

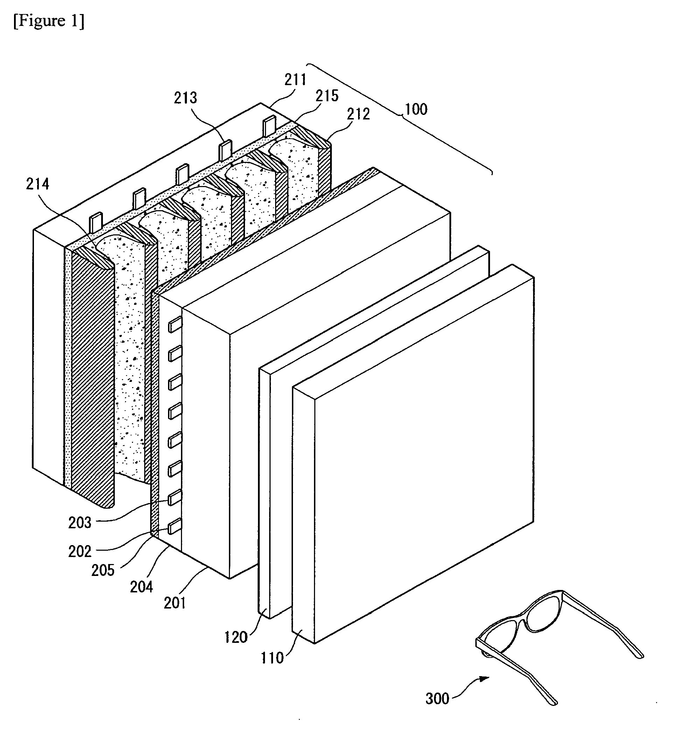

FIGs. 1 to 9 illustrate a filter and a display device according to an example embodiment of the invention.

FIG. 1 shows a plasma display panel as an example of a display panel. However, the display panel applicable to the embodiment of the invention is not limited to the plasma display panel. Other display panels may be used. For example, a liquid crystal display (LCD) panel, a field emission display (FED) panel, and an organic light emitting diode (OLED) display panel may be used.

As shown in FIG. 1, the display device according to the embodiment of the invention may include a plasma display panel 100 displaying an image, a linear polarizing filter 120, and a filter 110.

The linear polarizing filter 120 may convert light generated in the plasma display panel 100 into linearly polarized light. Hence, the plasma display panel 100 emitting non-polarized light may display a 3D image.

When the display device includes a liquid crystal display panel instead of the plasma display panel 100, the linear polarizing filter 120 may be omitted.

Alternatively, when the display device includes the liquid crystal display panel instead of the plasma display panel 100, the linear polarizing filter 120 may be used.

The liquid crystal display panel generally emits linearly polarized light. However, polarized light having a traveling direction different from the linearly polarized light may exist in light emitted by the liquid crystal display panel. The polarized light having the traveling direction different from the linearly polarized light may be referred to as stray light.

As an occupying rate of the stray light increases, an extinction ratio of a left eye image and a right eye image of the 3D image is reduced. Hence, the quality of the 3D image may be reduced.

On the other hand, as shown in FIG. 1, when the linear polarizing filter 120 is used, the linear polarizing filter 120 may convert stray light generated in the liquid crystal display panel into linearly polarized light, even if the display device includes the liquid crystal display panel as the display panel. Hence, polarization characteristic may be improved.

In this instance, the extinction ratio of the left eye image and the right eye image may increase, and thus the quality of the 3D image may be improved.

Hereinafter, it is assumed that light incident on the filter 110 is linearly polarized light.

The plasma display panel 100 displays a predetermined image on its screen, and the filter 110 is disposed in the front of the plasma display panel 100.

The plasma display panel 100 may include a front substrate 201, on which scan electrodes 202 and Y and sustain electrodes 203 and Z are disposed parallel to each other, and a back substrate 211 opposite the front substrate 201, on which address electrodes 213 are disposed to cross the scan electrodes 202 and the sustain electrodes 203.

An upper dielectric layer 204 covering the scan electrodes 202 and the sustain electrodes 203 may be disposed on the front substrate 201, on which the scan electrodes 202 and the sustain electrodes 203 are disposed.

The upper dielectric layer 204 may limit a discharge current of the scan electrode 202 and the sustain electrode 203 and may provide insulation between the scan electrode 202 and the sustain electrode 203.

A protective layer 205 may be disposed on the upper dielectric layer 204 to facilitate discharge conditions. The protective layer 205 may be formed of a material having a high secondary electron emission coefficient, for example, magnesium oxide (MgO).

Further, electrodes, for example, the address electrodes 213 may be disposed on the back substrate 211. A lower dielectric layer 215 may be disposed on the back substrate 211, on which the address electrodes 213 are disposed, to cover the address electrodes 213 and to provide insulation between the address electrodes 213.

A plurality of barrier ribs 212 of a stripe type, a well type, a delta type, a honeycomb type, etc. for partitioning a discharge space, i.e., a discharge cell may be disposed between the front substrate 201 and the back substrate 211. Hence, red discharge cells, green discharge cells, blue discharge cells, etc. may be provided between the front substrate 201 and the back substrate 211.

For example, when the barrier ribs 212 have a closed type barrier structure, each of the barrier ribs 212 may include a first barrier rib (not shown) and a second barrier rib (not shown) crossing each other. A height of the first barrier rib may be different from a height of the of the second barrier rib.

Each of the discharge cells provided by the barrier ribs 212 may be filled with a predetermined discharge gas. Phosphor layers 214 may be disposed inside the discharge cell to emit visible light for an image display during an address discharge. For example, a red phosphor layer, a green phosphor layer, and a blue phosphor layer may be disposed inside the discharge cell.

So far, the embodiment of the invention describes and illustrates an exemplary structure of the plasma display panel, but is not limited thereto. For example, the embodiment of the invention describes and illustrates that the scan electrodes 202 and the sustain electrodes 203 are disposed to contact the upper surface of the front substrate 201. However, at least one functional layer, for example, another dielectric layer may be disposed between the scan and sustain electrodes 202 and 203 and the front substrate 201. Alternatively, the upper dielectric layer 204 may have a multi-layered structure.

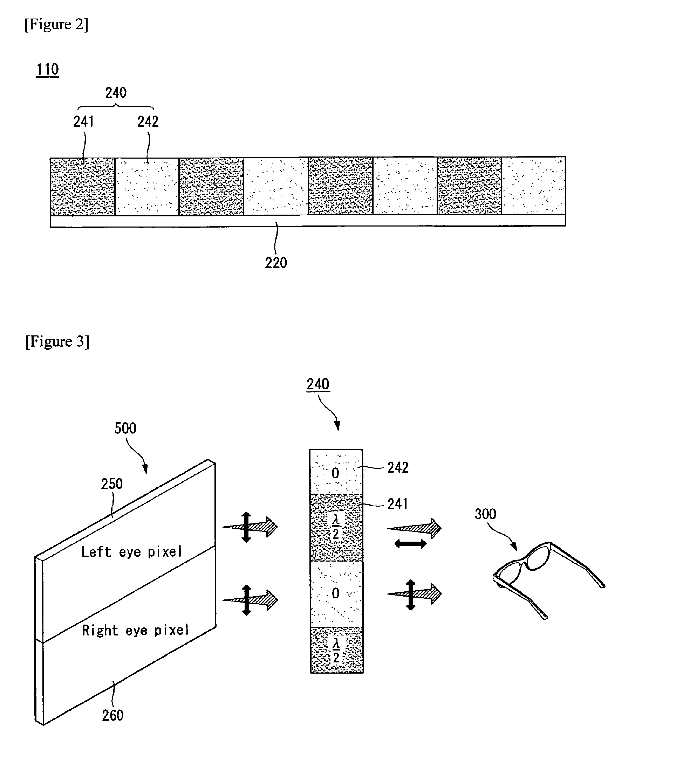

As shown in FIG. 2, when the filter 110 is disposed in the front of the plasma display panel 100, the filter 110 may include a first substrate 220 forming a basic frame and a linear polarizing layer 240.

The first substrate 220 may provide a space in which the linear polarizing layer 240 may be disposed. It may be preferable that the first substrate 220 is formed of a transparent material. For example, the first substrate 220 may be formed of glass or plastic. Preferably, the first substrate 220 may be an isotropic film substrate.

The linear polarizing layer 240 may polarize light emitted by the plasma display panel 100 and emit linearly polarized light.

The linear polarizing layer 240 may include a left eye image linear polarization part 241 and a right eye image linear polarization part 242. The left eye image linear polarization part 241 and the right eye image linear polarization part 242 may be disposed on the same layer parallel to each other. Further, a phase of the left eye image linear polarization part 241 may be perpendicular to a phase of the right eye image linear polarization part 242. For example, one of retardation values of the left eye image linear polarization part 241 and the right eye image linear polarization part 242 may be λ/2, and the other may be zero. Hence, a retardation difference between an image passing through the left eye image linear polarization part 241 and an image passing through the right eye image linear polarization part 242 may be about 90 °.

A method for implementing the 3D image using the filter 110 shown in FIG. 2 is described with reference to FIG. 3. It is assumed that a display panel 500 shown in FIG. 3 is a liquid crystal display panel capable of emitting linearly polarized light.

As shown in FIG. 3, light generated in a left eye image pixel 250 of the display panel 500 may pass through the left eye image linear polarization part 241 of the linear polarizing layer 240, and light generated in a right eye image pixel 260 of the display panel 500 may pass through the right eye image linear polarization part 242 of the linear polarizing layer 240.

As a result, the light passing through the left eye image linear polarization part 241 and the light passing through the right eye image linear polarization part 242 may substantially have a retardation difference of λ/2.

If a viewer wears 3D glasses 300 including different linear polarizing plates having a retardation difference of λ/2, the viewer perceives an image having the retardation difference of λ/2 through his or her both eyes, thereby feeling a stereoscopic feeling of the image. In this instance, each of a left eye lens and a right eye lens of the 3D glasses 300 may be a linear polarizing lens.

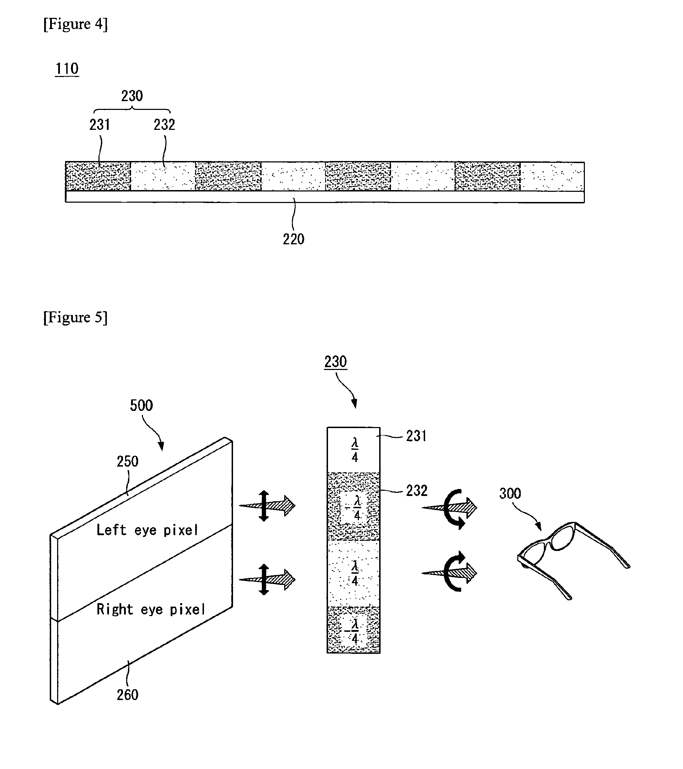

Alternatively, as shown in FIG. 4, the filter 110 may a first substrate 220 and a circular polarizing layer 230. The descriptions of the configuration and the structure described in FIG. 2 are omitted in FIG. 4.

The circular polarizing layer 230 may polarize light emitted by the plasma display panel 100 and emit circularly polarized light.

The circular polarizing layer 230 may include a left eye image circular polarization part 232 and a right eye image circular polarization part 231. The left eye image circular polarization part 232 and the right eye image circular polarization part 231 may be disposed on the same layer parallel to each other. Further, a phase of the left eye image circular polarization part 232 may be perpendicular to a phase of the right eye image circular polarization part 231. For example, one of retardation values of the left eye image circular polarization part 232 and the right eye image circular polarization part 231 may be λ/4, and the other may be -λ/4. Hence, a retardation difference between an image passing through the left eye image circular polarization part 232 and an image passing through the right eye image circular polarization part 231 may be about 90 °.

A method for implementing the 3D image using the filter 110 shown in FIG. 4 is described with reference to FIG. 5. It is assumed that a display panel 500 shown in FIG. 5 is a liquid crystal display panel capable of emitting linearly polarized light.

As shown in FIG. 5, light generated in a left eye image pixel 250 of the display panel 500 may pass through the left eye image circular polarization part 232 of the circular polarizing layer 230 and may be converted into circularly polarized light rotating in the left-handed direction. Further, light generated in a right eye image pixel 260 of the display panel 500 may pass through the right eye image circular polarization part 231 of the circular polarizing layer 230 and may be converted into circularly polarized light rotating in the right-handed direction. As a result, the light passing through the left eye image circular polarization part 232 and the light passing through the right eye image circular polarization part 231 may substantially have a retardation difference of λ/2.

If the viewer wears 3D glasses 300 including different circular polarizing plates having a retardation difference of λ/2, the viewer perceives an image having the retardation difference of λ/2 through his/her both eyes, thereby feeling a stereoscopic feeling of the image. In this instance, each of a left eye lens and a right eye lens of the 3D glasses 300 may be a circular polarizing lens.

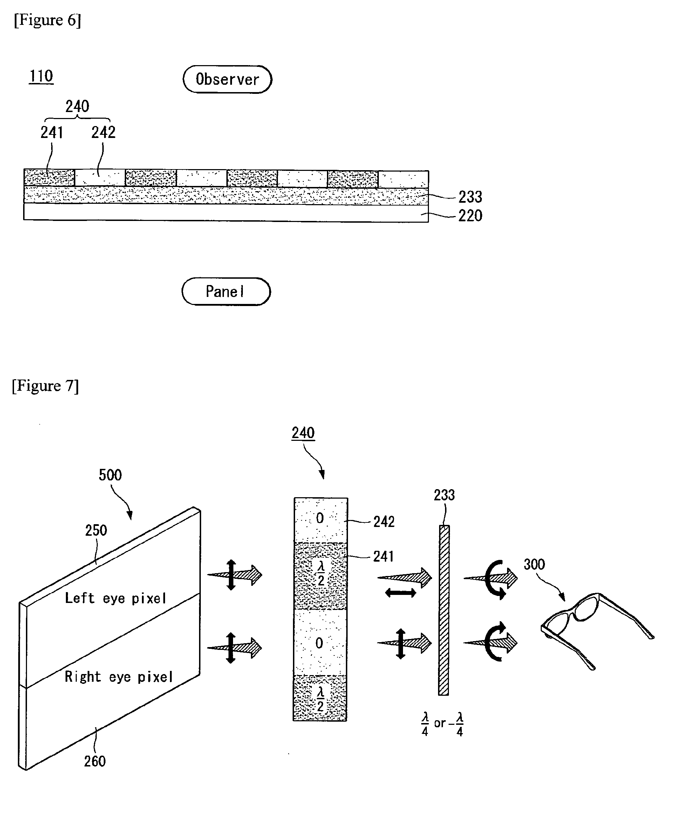

Alternatively, as shown in FIG. 6, the filter 110 may a first substrate 220, a circular polarizing layer 233, and a linear polarizing layer 240. The descriptions of the configuration and the structure described in FIGs. 2 and 4 are omitted in FIG. 6.

The circular polarizing layer 233 may be disposed on the first substrate 220, and the linear polarizing layer 240 may be disposed on the circular polarizing layer 233. Positions of the circular polarizing layer 233 and the linear polarizing layer 240 may be changed with each other.

The linear polarizing layer 240 may include a left eye image linear polarization part 241 and a right eye image linear polarization part 242. The linear polarizing layer 240 was described above in detail with reference to FIG. 2.

The circular polarizing layer 233 may have a retardation value of λ/4 or -λ/4. Further, the circular polarizing layer 233 may commonly overlap the left eye image linear polarization part 241 and the right eye image linear polarization part 242 of the linear polarizing layer 240. Namely, light passing through the left eye image linear polarization part 241 and light passing through the right eye image linear polarization part 242 pass through the circular polarizing layer 233.

A method for implementing the 3D image using the filter 110 shown in FIG. 6 is described with reference to FIG. 7. It is assumed that a display panel 500 shown in FIG. 7 is a liquid crystal display panel capable of emitting linearly polarized light.

As shown in FIG. 7, light generated in a left eye image pixel 250 of the display panel 500 may pass through the left eye image linear polarization part 241 of the linear polarizing layer 240, and light generated in a right eye image pixel 260 of the display panel 500 may pass through the right eye image linear polarization part 242 of the linear polarizing layer 240.

As a result, the light passing through the left eye image linear polarization part 241 and the light passing through the right eye image linear polarization part 242 may be linearly polarized light substantially having a retardation difference of λ/2.

Afterwards, the light passing through the left eye image linear polarization part 241 and the light passing through the right eye image linear polarization part 242 may pass through the circular polarizing layer 233 and thus may be circularly polarized light having a retardation difference of λ/2.

Accordingly, the viewer wears 3D glasses 300 including a left eye lens and a right eye lens, each of which is a circular polarizing lens, and may watch the 3D image.

The circular polarizing layer 233 or 230 may be used to increase a viewing angle, and thus the quality of the 3D image may be improved.

For example, as shown in FIGs. 2 and 3, when only the linear polarizing layer 240 is used, the display panel 500 displays an image having a predetermined phase angle. Further, both the left eye lens and the right eye lens of the 3D glasses 300 are linear polarizing lenses.

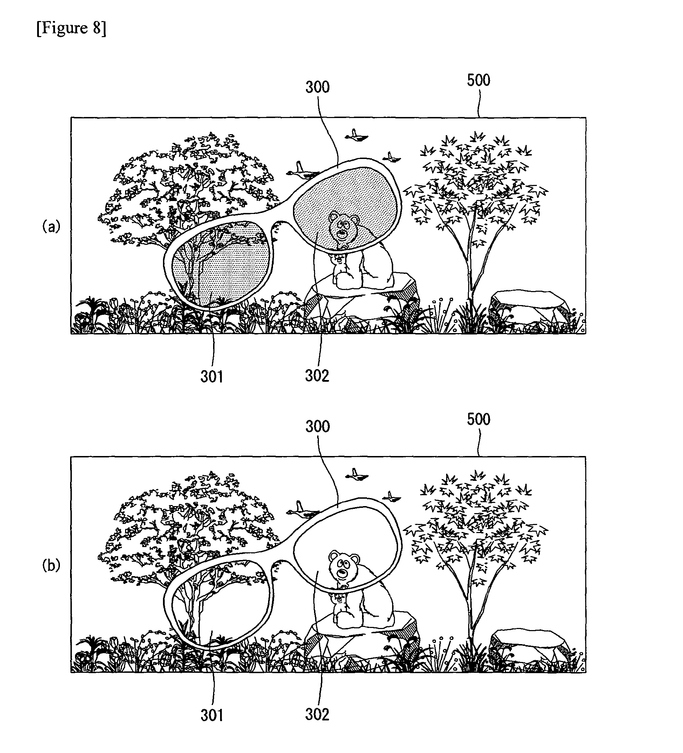

Thus, as shown in FIG. 8(a), when the viewer wears the 3D glasses 300 including a left eye lens 301 and a right eye lens 302, each of which is a linear polarizing lens, and watches an image displayed on the display panel 500 at a tilt angle, the viewer may watch the unclear and blurry image. This is because a phase of the image displayed on the display panel 500 is not equal to a phase of the image implemented by the 3D glasses 300.

On the other hand, as shown in FIGs. 4 to 7, when the circular polarizing layer 233 or 230 is used, the display panel 500 displays an image based on circular polarization having the properties rotating in a predetermined direction. Further, both a left eye lens 301 and a right eye lens 302 of the 3D glasses 300 are circular polarizing lenses.

Thus, as shown in FIG. 8(b), when the viewer wears the 3D glasses 300 including the left eye lens 301 and the right eye lens 302, each of which is a circular polarizing lens, and watches an image displayed on the display panel 500 at a tilt angle, the viewer may watch the clear image. In other words, the circular polarizing layer 233 or 230 may be used to increase the viewing angle, and thus the quality of the 3D image may be improved.

Further, as shown in FIGs. 6 and 7, when the filter 110 including both the linear polarizing layer 240 and the circular polarizing layer 233 is used, an influence of stray light may be reduced. Hence, the separation between a left eye image and a right eye image of the 3D image may be improved, and the quality of the 3D image may be improved.

In the filter 110, a position of the first substrate 220 may vary.

The filter 110 may further include at least one functional layer in addition to the linear polarizing layer 240 and the circular polarizing layer 233 or 230.

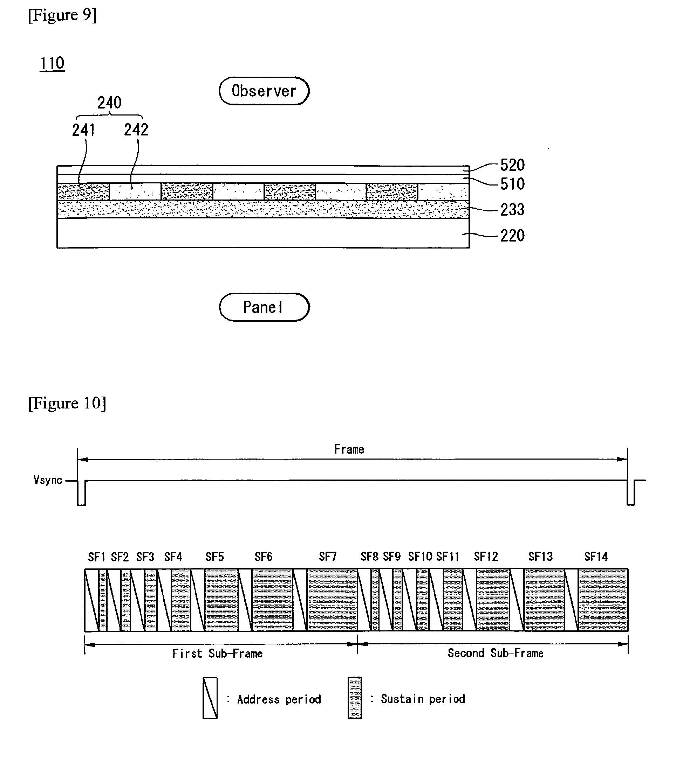

For example, as shown in FIG. 9, the filter 110 may further include an anti-reflection layer 510 for preventing the reflection of light coming from the outside or a hard coating layer 520 for protecting the filter 110 from a pressure or an impact applied from the outside.

Further, the filter 110 may include various functional layers such as an anti-static layer and an anti-smudge layer.

FIGs. 10 to 15 illustrate an example of using shutter type 3D glasses. In the following description, the descriptions of the configuration and the structure described above are omitted. The embodiment of the invention describes only a method for applying the shutter type 3D glasses to the plasma display panel. However, the embodiment of the invention may be applied to any display panel, which can be driven in one frame divided into a left eye subframe and a right eye subframe.

FIG. 10 illustrates a structure of a frame for implementing a 3D image by the plasma display panel.

As shown in FIG. 10, a frame for representing a gray level of the 3D image may include a plurality of subframes each including at least one subfield. For example, as shown in FIG. 10, one frame may include first and second subframes each including at least one subfield. In the following description, the first subframe may be a left eye subframe corresponding to the left eye lens, and the second subframe may be a right eye subframe corresponding to the right eye lens. Positions of the first subframe and the second subframe may be changed with each other. The number of subfields included in each of the first and second subframes may be variously changed.

The subfield may include an address period, in which the discharge cells not to generate a discharge are selected or the discharge cells to generate a discharge are selected, and a sustain period, in which a gray level is represented depending on the number of discharges.

For example, each of the first and second subframes may include seven subfields SF1-SF7 or SF8-SF14 for representing 128-gray level, and each of the seven subfields SF1-SF7 or SF8-SF14 may include an address period and a sustain period.

Furthermore, at least one of the plurality of subfields of the frame may further include a reset period for initialization. Preferably, a first subfield of the subframe may include a reset period in which a reset signal is supplied to the scan electrode.

A weight value of each of the subfields may be set by adjusting the number of sustain signals supplied during the sustain period. Namely, a predetermined weight value may be assigned to each subfield using the sustain period. For example, in such a method of setting a weight value of a first subfield at 2° and a weight value of a second subfield at 2¹, the weight value of each subfield may increase in a rate of 2ⁿ (where, n = 0, 1, 2, 3, 4, 5, and 6). Hence, gray levels of various images may be represented by adjusting the number of sustain signals supplied in the sustain period of each subfield based on the weight value of each subfield.

FIG. 10 illustrates that the number of subfields constituting the first subframe is equal to the number of subfields constituting the second subframe. However, the number of subfields constituting the first subframe may be different from the number of subfields constituting the second subframe.

FIG. 10 illustrates that the subfields of each subframe are arranged in increasing order of weight values. However, the subfields of each subframe may be arranged in decreasing order of weight values or may be arranged regardless of weight values.

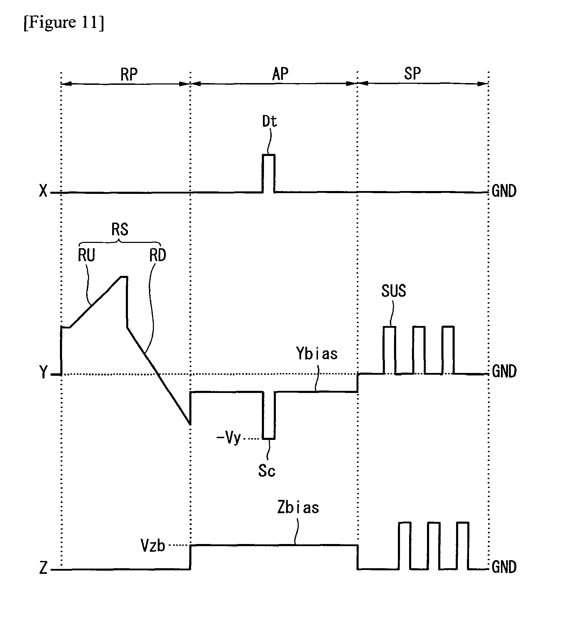

FIG. 11 illustrates an example of a driving waveform for driving the plasma display panel.

As shown in FIG. 11, a reset signal RS may be supplied to the scan electrode Y during a reset period RP for initialization of at least one of a plurality of subfields of a subframe. The reset signal RS may include a ramp-up signal RU with a gradually rising voltage and a ramp-down signal RD with a gradually falling voltage.

More specifically, the ramp-up signal RU may be supplied to the scan electrode Y during a setup period SU of the reset period RP, and the ramp-down signal RD may be supplied to the scan electrode Y during a set-down period SD following the setup period.

The ramp-up signal RU supplied to the scan electrode Y generates a weak dark discharge (i.e., a setup discharge) inside the discharge cells. Hence, wall charges may be uniformly distributed inside the discharge cells.

The ramp-down signal RD subsequent to the ramp-up signal RU generates a weak erase discharge (i.e., a set-down discharge) inside the discharge cells. Hence, the remaining wall charges may be uniformly distributed inside the discharge cells to the extent that an address discharge occurs stably.

During an address period AP following the reset period RP, a scan reference signal Ybias having a voltage greater than a minimum voltage of the ramp-down signal RD may be supplied to the scan electrode Y.

Further, a scan signal Sc falling from a voltage of the scan reference signal Ybias may be supplied to the scan electrode Y during the address period AP.

As above, when the scan signal Sc is supplied to the scan electrode Y, a data signal Dt corresponding to the scan signal Sc may be supplied to the address electrode X.

As a voltage difference between the scan signal Sc and the data signal Dt is added to a wall voltage obtained by the wall charges produced during the reset period RP, an address discharge may occur inside the discharge cell to which the data signal Dt is supplied.

Further, during the address period AP, a sustain reference signal Zbias may be supplied to the sustain electrode Z, so that the address discharge efficiently occurs between the scan electrode Y and the address electrode X.

During a sustain period SP following the address period AP, a sustain signal SUS may be supplied to at least one of the scan electrode Y and the sustain electrode Z. For example, the sustain signal SUS may be alternately supplied to the scan electrode Y and the sustain electrode Z.

As the wall voltage inside the discharge cell selected by performing the address discharge is added to a sustain voltage Vs of the sustain signal SUS, every time the sustain signal SUS is supplied, a sustain discharge, i.e., a display discharge may occur between the scan electrode Y and the sustain electrode Z.

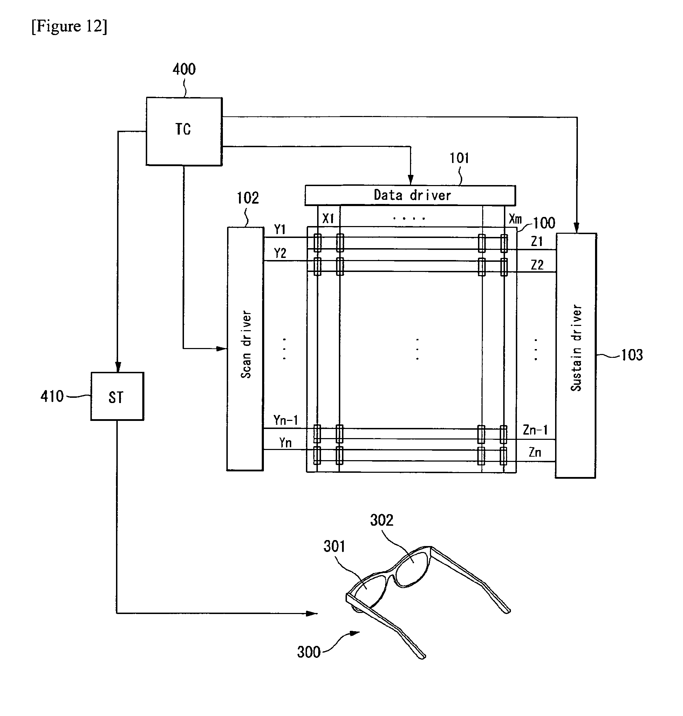

FIG. 12 illustrates an example of a configuration of the display device for implementing the 3D image using the plasma display panel.

The display device may include a plasma display panel 100, a data driver 101, a scan driver 102, a sustain driver 103, 3D glasses 300, a timing controller 400, and a signal transmitter 410.

In FIG. 12, each of the data driver 101, the scan driver 102, and the sustain driver 103 is formed on a different board. However, at least two of the data driver 101, the scan driver 102, and the sustain driver 103 may be formed on one board or may form an integral body. For example, the scan driver 102 and the sustain driver 103 may be formed on one board.

The data driver 101 may supply a driving signal, for example, a data signal to address electrodes X1-Xm of the plasma display panel 100.

The scan driver 102 may supply a driving signal, for example, a scan signal to scan electrodes Y1-Yn of the plasma display panel 100.

The sustain driver 103 may supply a driving signal, for example, a sustain signal to sustain electrodes Z1-Zn of the plasma display panel 100.

The timing controller 400 may supply a predetermined timing control signal to each of the data driver 101, the scan driver 102, the sustain driver 103, and the signal transmitter 410, so as to control timing of each of the driving signals.

Further, the timing controller 400 generates a synchronization signal SS for controlling turn-on and turn-off operations of a left eye lens 301 and a right eye lens 302 of the 3D glasses 300.

The signal transmitter 410 may transfer the synchronization signal SS under the control of the timing controller 400.

A signal receiver (not shown) of the 3D glasses 300 receives the synchronization signal SS, and thus the turn-on and turn-off operations of the left eye lens 301 and the right eye lens 302 may be controlled in response to the synchronization signal SS.

More specifically, the timing controller 400 may turn on the left eye lens 301 in a left eye subframe and may turn on the right eye lens 302 in a right eye subframe.

Preferably, the timing controller 400 may supply the timing control signal, i.e., the synchronization signal SS to the 3D glasses 300 through the signal transmitter 410, thereby controlling turn-on and turn-off time points of the left eye lens 301 and the right eye lens 302.

It may be preferable that each of the left eye lens 301 and the right eye lens 302 includes a liquid crystal layer (not shown), whose molecular arrangement varies based on a voltage applied to each of the left eye lens 301 and the right eye lens 302, so as to turn on or off the left eye lens 301 and the right eye lens 302 in response to the synchronization signal SS.

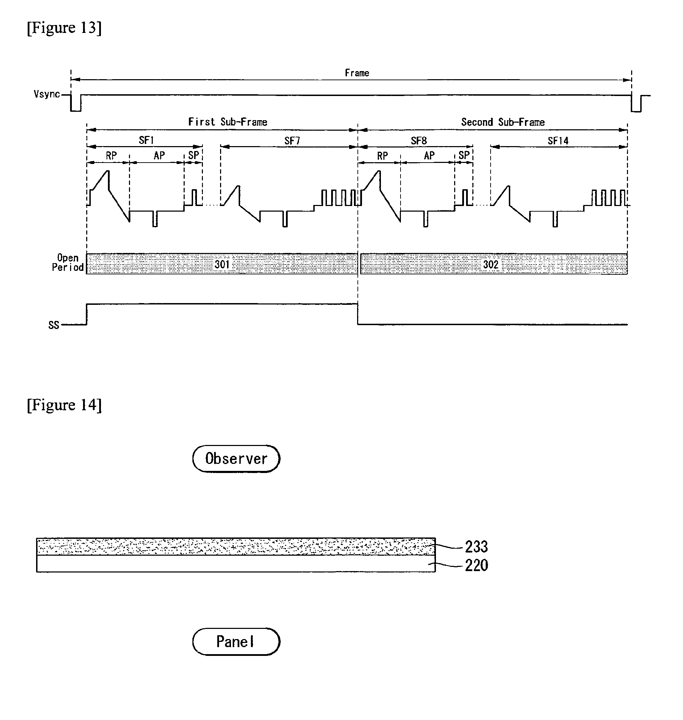

For example, as shown in FIG. 13, it is assumed that one frame includes a first subframe and a second subframe, the first subframe includes first to seventh subfields SF1 to SF7, and the second subframe includes eighth to fourteenth subfields SF8 to SF14.

In this instance, the left eye lens 301 may be turned on and the right eye lens 302 may be turned off during the first to seventh subfields SF1 to SF7, and the left eye lens 301 may be turned off and the right eye lens 302 may be turned on during the eighth to fourteenth subfields SF8 to SF14. The first subframe may be referred to as a left eye subframe, and the second subframe may be referred to as a right eye subframe.

FIG. 13 illustrates that the left eye subframe (i.e., the first subframe) is arranged earlier than the right eye subframe (i.e., the second subframe) in the one frame. On the contrary, the right eye subframe may be arranged earlier than the left eye subframe in one frame.

As above, when the 3D glasses 300 operate in a shutter manner, in which the left eye lens 301 and the right eye lens 302 are turned on or off in response to the synchronization signal SS, a filter of the display device may include a circular polarizing layer. For example, as shown in FIG. 14, a filter 110 of the display device may include a first substrate 220 and a circular polarizing layer 233 disposed on the first substrate 220. Further, each of the left eye lens 301 and the right eye lens 302 of the 3D glasses 300 may transmit circularly polarized light and may be turned on or off in response to the synchronization signal SS.

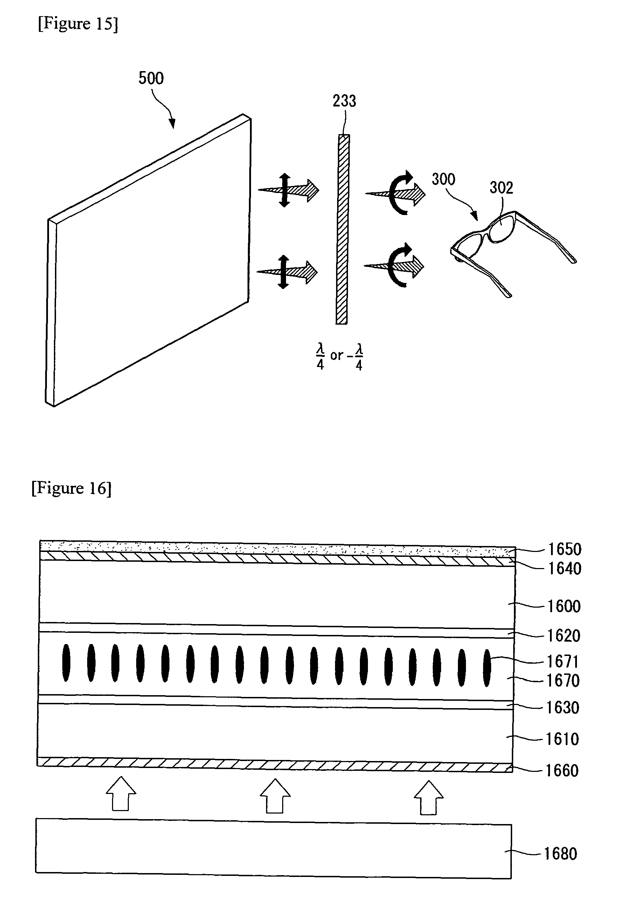

In this instance, as shown in FIG. 15, light generated in a display panel 500 may pass through the circular polarizing layer 233 and thus may be converted into circularly polarized light.

Hence, the viewer may wear the 3D glasses 300 and may watch the 3D image.

As above, the circular polarizing layer 233 may be used to increase the viewing angle.

FIGs. 16 to 18 illustrate a liquid crystal display. In the following description, the descriptions of the configuration and the structure described above are omitted.

The liquid crystal display may include a liquid crystal display panel and 3D glasses. The 3D glasses applicable to the liquid crystal display according to the embodiment of the invention may be polarization type 3D glasses illustrated in FIGs. 1 to 9 or shutter type 3D glasses illustrated in FIGs. 10 to 15.

As shown in FIG. 16, the liquid crystal display panel may include a first substrate 1600, on which a first electrode 1620 is disposed, a second substrate 1610, on which a second electrode 1630 is disposed, a liquid crystal layer 1670 disposed between the first substrate 1600 and the second substrate 1610, a first linear polarizing layer 1640 disposed on the first substrate 1600, a circular polarizing layer 1650 disposed adjacent to the first linear polarizing layer 1640, and a second linear polarizing layer 1660 disposed on the second substrate 1610. Further, the liquid crystal display panel may include a backlight unit 1680 disposed on the side of the second linear polarizing layer 1660.

The first substrate 1600 and/or the second substrate 1610 may be a glass substrate. Further, an alignment layer (not shown) for setting a pre-tile angle of liquid crystals may be formed on the first substrate 1600 and/or the second substrate 1610.

The first electrode 1620 and/or the second electrode 1630 may be a transparent electrode. Further, the first electrode 1620 and/or the second electrode 1630 may apply a voltage supplied from a thin film transistor (TFT) (not shown) to the liquid crystal layer 1670.

The liquid crystal layer 1670 may include a plurality of liquid crystal molecules 1671. The arrangement of the liquid crystal molecules 1671 may vary based on a voltage supplied from the first electrode 1620 and/or the second electrode 1630.

Each of the first linear polarizing layer 1640 and the second linear polarizing layer 1660 has a light transmission axis of a predetermined direction. Further, the light transmission axis of the first linear polarizing layer 1640 may be substantially perpendicular to the light transmission axis of the second linear polarizing layer 1660.

The circular polarizing layer 1650 may convert light emitted from the backlight unit 1680 into circularly polarized light.

An operation of a twisted nematic (TN) mode is described on the assumption that the liquid crystal display is driven in a normally white mode.

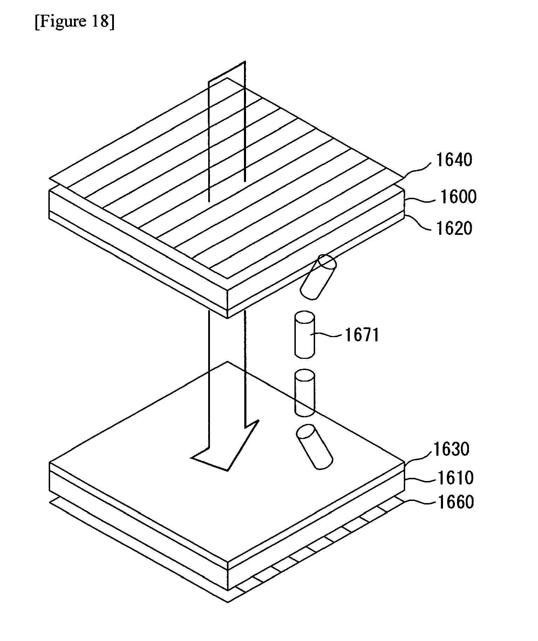

As shown in FIG. 18, because any substantial force is not applied to the liquid crystal molecules 1671 in an inactive state where the voltage is not applied to the first electrode 1620 and the second electrode 1630, the liquid crystal molecules 1671 do not rotate. In this instance, because a polarization component of light, which passes through the second linear polarizing layer 1660 and is incident on the liquid crystal layer 1670, is maintained, the light does not pass through the first linear polarizing layer 1640.

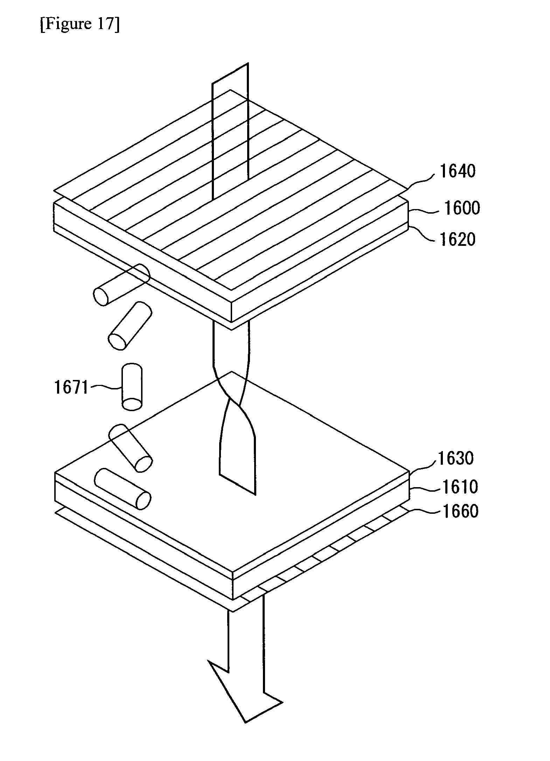

On the other hand, as shown in FIG. 17, the liquid crystal molecules 1671 may rotate by the applied voltage in a direction of an induced magnetic field formed in a surface direction of the first substrate 1600 in an active state where the voltage is applied to the first electrode 1620 and the second electrode 1630. In this instance, a polarization component of light, which passes through the second linear polarizing layer 1660 and is incident on the liquid crystal layer 1670, is changed by the liquid crystal molecules 1671, and thus the light may pass through the first linear polarizing layer 1640.

In this way, a switching operation of the liquid crystal layer 1670 may be performed.

As shown in FIG. 16, because the liquid crystal display panel according to the embodiment of the invention includes the circular polarizing layer 1650 along with the linear polarizing layers 1640 and 1660, the liquid crystal display according to the embodiment of the invention does not have to include a filter including a circular polarizing layer for generating the circular polarized light. Thus, because the liquid crystal display according to the embodiment of the invention may implement the circular polarized light without the filter, the thickness of the liquid crystal display may be further reduced.

The shutter type 3D glasses illustrated in FIGs. 10 to 15 may be applied to the liquid crystal display according to the embodiment of the invention.

Each of the left eye lens and the right eye lens of the shutter type 3D glasses may transmit the circular polarized light and may be turned on or off in response to the input synchronization signal. For this, it may be preferable that each of the left eye lens and the right eye lens includes the liquid crystal layer. The liquid crystal display according to the embodiment of the invention may further include a signal transmitter, which transfers the synchronization signal to the shutter type 3D glasses so as to control turn-on and turn-off operations of the left eye lens and the right eye lens of the shutter type 3D glasses. The signal transmitter was described in detail above with reference to FIGs. 10 to 15.

Alternatively, the polarization type 3D glasses may be applied to the liquid crystal display according to the embodiment of the invention. For this, the liquid crystal display according to the embodiment of the invention may include the filter 110 illustrated in FIGs. 2 and 3.

In other words, it may be preferable that the liquid crystal display according to the embodiment of the invention may include the filter 110 shown in FIGs. 2 and 3 including the linear polarizing layer 240 having the left eye image linear polarization part 241 and the right eye image linear polarization part 242. One of the left eye image linear polarization part 241 and the right eye image linear polarization part 242 may have a retardation value of λ/2, and the other may have a retardation value of zero.

Further, the left eye lens and the right eye lens of the 3D glasses 300 may be a polarizing lens, more specifically, a circular polarizing lens having a retardation difference of about λ/2.

As above, when the filter 110 including the linear polarizing layer 240 having the left eye image linear polarization part 241 and the right eye image linear polarization part 242 is disposed in the front of the liquid crystal display panel including the circular polarizing layer 1650, the viewer may watch the 3D image according to the circularly polarized light through the 3D glasses.

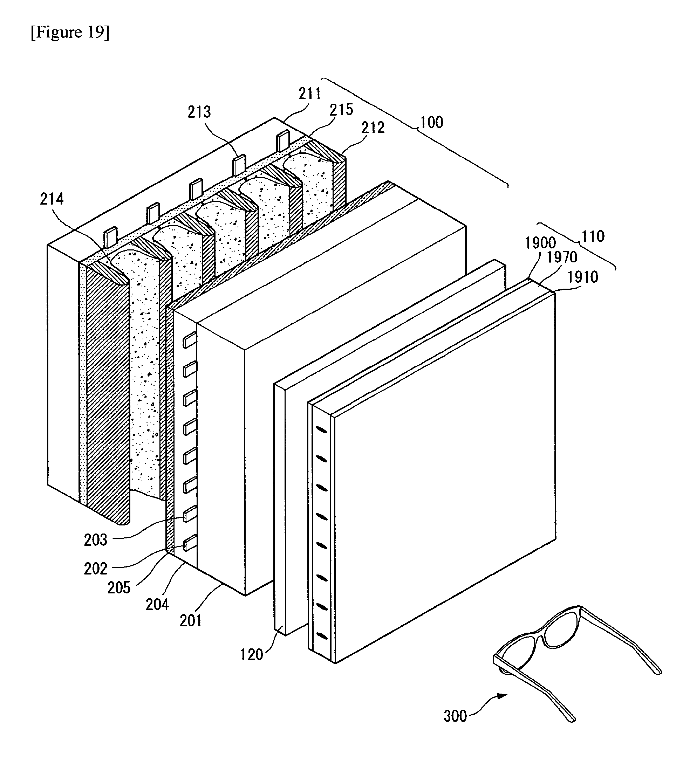

FIGs. 19 to 24 illustrate a filter using a liquid crystal layer. In the following description, the descriptions of the configuration and the structure described above are omitted. Further, in the following description, the embodiment of the invention is described using the plasma display panel, but may be described using other display panels such as the liquid crystal display panel.

As shown in FIG. 19, a filter 110 disposed in the front of a plasma display panel 100 may include a liquid crystal layer 1970.

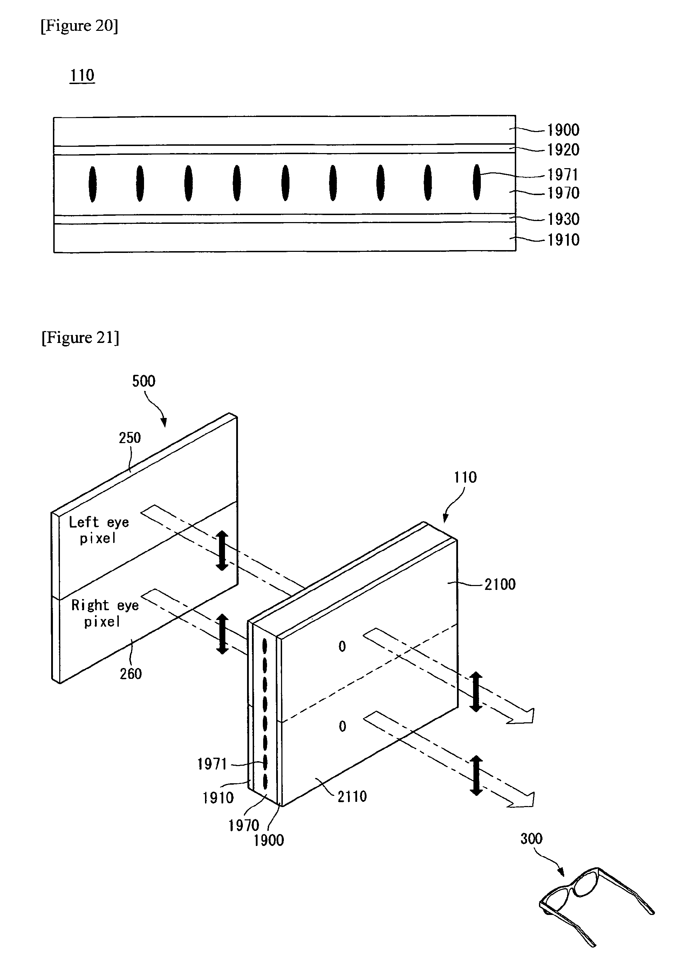

More specifically, as shown in FIG. 20, the filter 110 may include a first substrate 1900, on which a first electrode 1920 is disposed, a second substrate 1910, on which a second electrode 1930 is disposed, and a liquid crystal layer 1970 disposed between the first substrate 1900 and the second substrate 1910. The first substrate 1900 and/or the second substrate 1910 may be a glass substrate. Further, an alignment layer (not shown) for setting a pre-tile angle of liquid crystals may be formed on the first substrate 1900 and/or the second substrate 1910.

The first electrode 1920 and/or the second electrode 1930 may be a transparent electrode. Further, the first electrode 1920 and/or the second electrode 1930 may apply a voltage supplied from a thin film transistor (TFT) (not shown) to the liquid crystal layer 1970.

The liquid crystal layer 1970 may include a plurality of liquid crystal molecules 1971. The arrangement of the liquid crystal molecules 1971 may vary based on a voltage supplied from the first electrode 1920 and/or the second electrode 1930.

The liquid crystal layer 1970 may have a 3D mode or a 2D mode based on changes in the arrangement of the liquid crystal molecules 1971. Namely, the liquid crystal layer 1970 may have the 3D mode or the 2D mode based on a driving signal supplied to the first electrode 1920 and/or the second electrode 1930. This is described in detail below.

As shown in FIG. 21, the filter 110 may include a left eye image part 2100 and a right eye image part 2110. Hence, the liquid crystal layer 1970 may include a left eye image part and a right eye image part.

In the 2D mode, a retardation value of the left eye image part 2100 may be substantially equal to a retardation value of the right eye image part 2110. For example, because the voltage is supplied to the first electrode 1920 and the second electrode 1930 in the left eye image part 2100 and the right eye image part 2110, the liquid crystal molecules 1971 may be arranged in the arrangement form shown in FIG. 17. Hence, light generated in a display panel 500 may pass through the liquid crystal layer 1970 without changes in a phase of the light. Preferably, in the 2D mode, the retardation value of the left eye image part 2100 and the retardation value of the right eye image part 2110 may be zero. Preferably, the light generated in the display panel 500 may pass through the liquid crystal layer 1970 without excessively reducing a luminance. Hence, a 2D image may be implemented.

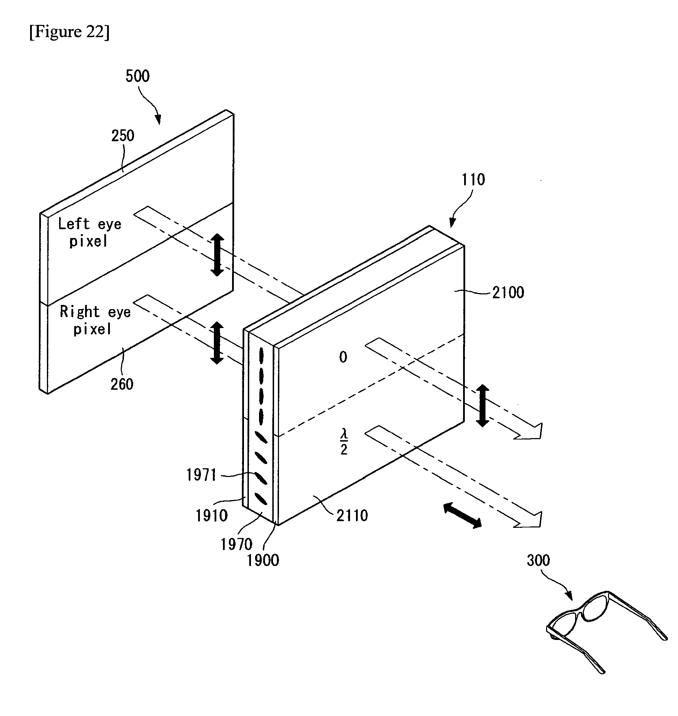

Further, in the 3D mode, as shown in FIG. 22, a retardation value of the left eye image part 2100 may be different from a retardation value of the right eye image part 2110. Preferably, in the 3D mode, a difference between the retardation value of the left eye image part 2100 and the retardation value of the right eye image part 2110 may be about λ/2.

For this, light generated in the display panel 500 may pass through the liquid crystal layer 1970 without changes in a phase of the light by turning on the left eye image part 2100. Namely, the retardation value of the left eye image part 2100 is substantially zero. On the other hand, because a voltage different from the voltage supplied to the left eye image part 2100 is supplied to the first electrode 1920 and the second electrode 1930 in the right eye image part 2110, the right eye image part 2110 may have a retardation value of λ/2 by adjusting an arrangement angle of the liquid crystal molecules 1971.

In this instance, if the viewer wears the linear polarization type 3D glasses 300, the viewer may watch the 3D image.

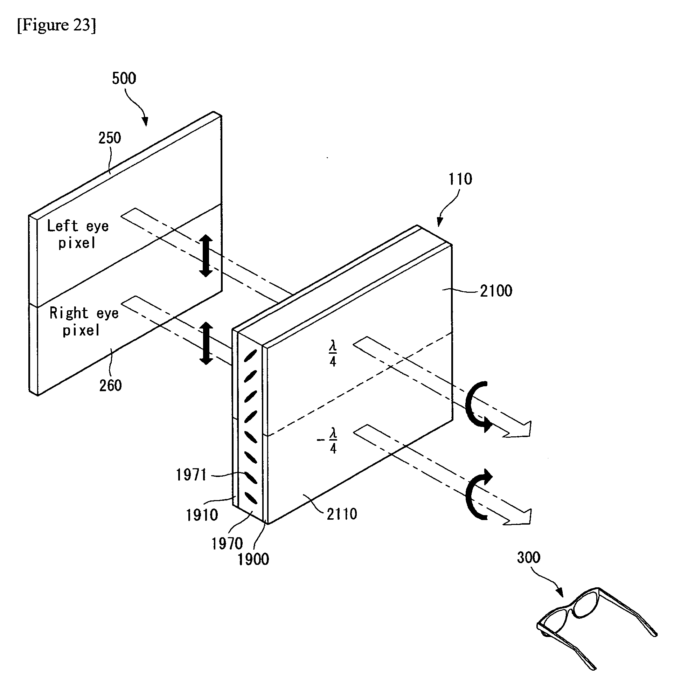

Alternatively, in the 3D mode, as shown in FIG. 23, a retardation value of the left eye image part 2100 may be λ/4, and a retardation value of the right eye image part 2110 may be -λ/4.

For this, a first driving signal is supplied to the first electrode 1920 and the second electrode 1930 in the left eye image part 2100, and a second driving signal different from the first driving signal is supplied to the first electrode 1920 and the second electrode 1930 in the right eye image part 2110. Hence, the retardation value of the left eye image part 2100 may be λ/4, and the retardation value of the right eye image part 2110 may be -λ/4 by adjusting an arrangement angle of the liquid crystal molecules 1971.

In this instance, if the viewer wears the circular polarization type 3D glasses 300, the viewer may watch the 3 D image.

Further, when the filter 110 including the liquid crystal layer 1970 is used, the shutter type 3D glasses 300 may be applied to the display device.

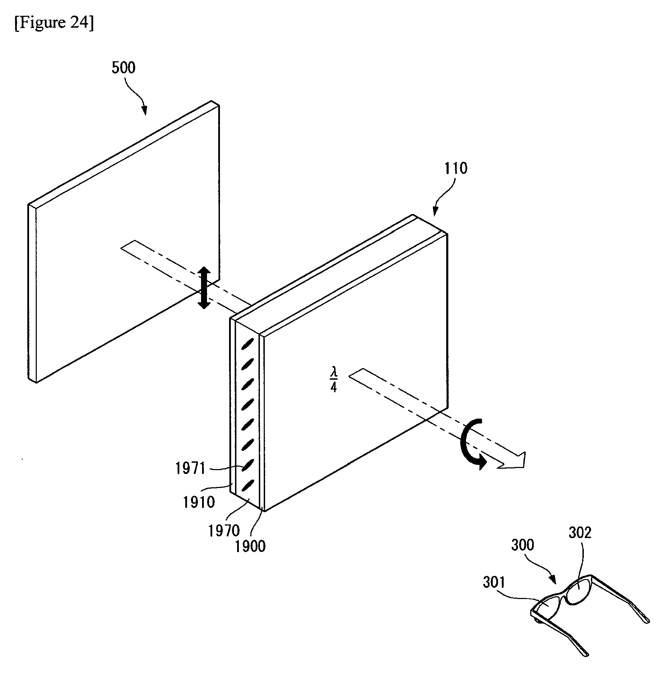

Further, as shown in FIG. 24, when the shutter type 3D glasses 300 is applied, the filter 110 including the liquid crystal layer 1970 may allow a retardation value of the liquid crystal layer 1970 to be λ/4 in the 3D mode. For this, an arrangement angle of the liquid crystal molecules 1971 may be adjusted by supplying a predetermined driving signal to the first electrode 1920 and the second electrode 1930. Hence, the retardation value of the liquid crystal layer 1970 may be λ/4. Alternatively, in the 3D mode, the retardation value of the liquid crystal layer 1970 may be -λ/4.

In this instance, if the viewer wears the shutter type 3D glasses 300, the viewer may watch the 3D image.

Each of the left eye lens 301 and the right eye lens 302 of the shutter type 3D glasses 300 may pass through circularly polarized light and may be turned on or off in response to the input synchronization signal. For this, it may be preferable that each of the left eye lens 301 and the right eye lens 302 includes the liquid crystal layer. This was described in detail above with reference to FIGs. 10 to 15.

For example, the right eye lens 302 may be turned on and the right eye image may be implemented in one frame. The left eye lens 301 may be turned on and the left eye image may be implemented in a next frame.

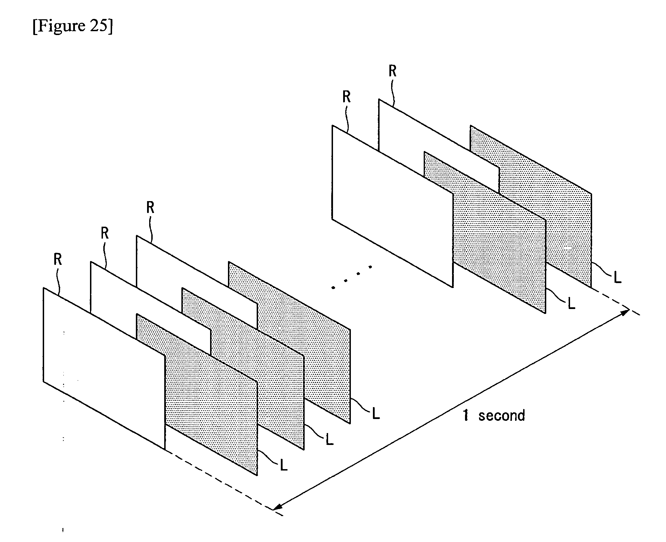

For example, as shown in FIG. 25, when an image according to a total of 120 frames (i.e., 120 Hz) is implemented for one second, 60 right eye frames R and 60 left eye frames L may be alternately implemented. In this instance, the right eye lens 302 may be turned on and the left eye lens 301 may be turned off in the right eye frames R. Further, the left eye lens 301 may be turned on and the right eye lens 302 may be turned off in the left eye frames L.

Alternatively, right eye frames R and left eye frames L may be alternately arranged in a method for implementing an image according to a total of 60 frames (i.e., 60 Hz) for one second and a method for implementing an image according to a total of 240 frames (i.e., 240 Hz) for one second.

## Claims

1. A display device comprising:
a display panel;
a filter disposed in the front of the display panel; and
3D glasses including a left eye lens and a right eye lens,
wherein the filter includes a substrate and a circular polarizing layer disposed on the substrate,
wherein each of the left eye lens and the right eye lens transmits circularly polarized light and is turned on or off in response to an input synchronization signal.

2. The display device of claim 1, wherein each of the left eye lens and the right eye lens includes a liquid crystal layer.

3. The display device of claim 1, further comprising a signal transmitter for supplying the synchronization signal to the 3D glasses.

4. A liquid crystal display comprising:
a liquid crystal display panel; and
3D glasses including a left eye lens and a right eye lens,
wherein the liquid crystal display panel includes:
a first substrate, on which a first electrode is disposed;
a second substrate, on which a second electrode is disposed;
a liquid crystal layer disposed between the first substrate and the second substrate;
a first linear polarizing layer disposed on the first substrate;
a circular polarizing layer disposed adjacent to the first linear polarizing layer; and
a second linear polarizing layer disposed on the second substrate.

5. The liquid crystal display of claim 4, wherein each of the left eye lens and the right eye lens transmits circularly polarized light and is turned on or off in response to an input synchronization signal.

6. The liquid crystal display of claim 5, wherein each of the left eye lens and the right eye lens includes a liquid crystal layer.

7. The liquid crystal display of claim 4, further comprising a signal transmitter for supplying the synchronization signal to the 3D glasses.

8. The liquid crystal display of claim 4, further comprising a filter disposed in the front of the liquid crystal display panel,
wherein the filter includes a third linear polarizing layer.

9. The liquid crystal display of claim 8, wherein the third linear polarizing layer includes a left eye image linear polarization part and a right eye image linear polarization part.

10. The liquid crystal display of claim 9, wherein one of the left eye image linear polarization part and the right eye image linear polarization part has a retardation value of λ/2, and the other has a retardation value of zero.

11. The liquid crystal display of claim 8, wherein each of the left eye lens and the right eye lens is a polarizing lens.

12. The liquid crystal display of claim 11, wherein a difference between retardation values of the left eye lens and the right eye lens is about λ/2.

13. A filter comprising:
a first substrate;
a second substrate; and
a liquid crystal layer disposed between the first substrate and the second substrate,
wherein the liquid crystal layer includes a left eye image part and a right eye image part,
wherein a retardation value of the left eye image part and a retardation value of the right eye image part are substantially equal to each other in a 2D mode,
wherein the retardation value of the left eye image part is different from the retardation value of the right eye image part in a 3D mode.

14. The liquid crystal display of claim 13, further comprising a first electrode disposed on the first substrate and a second electrode disposed on the second substrate.

15. The liquid crystal display of claim 14, wherein each of the first electrode and the second electrode is a transparent electrode.

16. The liquid crystal display of claim 13, wherein the retardation value of the left eye image part and the retardation value of the right eye image part are zero in the 2D mode.

17. The liquid crystal display of claim 13, wherein a difference between the retardation value of the left eye image part and the retardation value of the right eye image part is about λ/2 in the 3D mode.

18. The liquid crystal display of claim 17, wherein one of the retardation value of the left eye image part and the retardation value of the right eye image part is about λ/4, and the other is about -λ/4 in the 3D mode.

19. The liquid crystal display of claim 17, wherein one of the retardation value of the left eye image part and the retardation value of the right eye image part is about λ/2, and the other is zero in the 3D mode.

20. The liquid crystal display of claim 13, wherein the 2D mode and the 3D mode are changed based on a driving signal supplied to the first electrode and/or the second electrode.
